# EUROPEAN PATENT APPLICATION

(11) **EP 1 519 218 A1**
(43) Date of publication of application: **30.03.2005**
(21) Application number: 03733043.8
(22) Date of filing: 23.05.2003
(51) Int. Cl.: G02F 1/1333, G02F 1/13357

(54) **PORTABLE TERMINAL APPARATUS**

(30) Priority: 01.07.2002 JP 2002192093
(71) Applicant: MATSUSHITA ELECTRIC INDUSTRIAL CO., LTD., Kadoma-shi, Osaka 571-8501 (JP)
(72) Inventor: HAYAKAWA, Haruo, Yokohama-shi, Kanagawa 222-0031 (JP)
(74) Representative: Grünecker, Kinkeldey, Stockmair & Schwanhäusser Anwaltssozietät
(86) International application number: PCT/JP2003/006483
(87) International publication number: WO 2004/003643

(57) **Abstract**

It is an object of the present invention to provide a portable terminal apparatus in which an adequate visibility can be assured even when a periphery is dark, and liquid crystal display surfaces provided on both surfaces are irradiated with one light source in a casing. Thus, thickness and weight can be easily reduced. The portable terminal apparatus according to the present invention is a portable terminal apparatus for displaying information on a plurality of display parts (display surfaces) (11) and (12) provided on both the surfaces of a front and back surfaces of an upper casing (4) by using a single liquid crystal display device (4). A light guide plate (42) is provided for guiding illuminating lights from a light emitting element (41) of the single liquid crystal display device (4) to opposite directions to each other to irradiate both the surfaces of a main body part (40) of the liquid crystal display device (4) with the lights.

## Description

### <Technical Field>

The present invention relates to a portable terminal apparatus such as a portable telephone, a PHS, a PDA, a pager, etc., and more particularly to a portable terminal apparatus in which display surfaces of display parts provided in both surfaces of a liquid crystal display device for displaying characters, symbols or the like used in the portable terminal apparatus.

### <Background Art>

in recent years, a portable terminal apparatus such as a portable telephone has been outstandingly continuously spread. A use thereof is not limited to speaking and a request for obtaining character information has been also increased.

Thus, the portable terminal apparatus tends to enlarge a display surface so that much character information can be displayed at a time. Accordingly, not only a bar type portable terminal apparatus, but also a collapsible or foldable portable terminal apparatus has been increasingly demanded in which a display part and a key input part are separately provided in two separate and independent casings so as to easily ensure a large area.

Further, in the foldable portable terminal apparatus, a user has a desire to recognize only a history upon receiving a call while the portable terminal apparatus is kept folded without opening the casings. Thus, a portable terminal apparatus has been developed that has, on both surfaces of a main body, two independent and separate surfaces including a conventional main display part for reading information and a display part (refer it to as a sub-display part, hereinafter) as a subordinate element for displaying only a call receiving history. This structure is briefly described below.

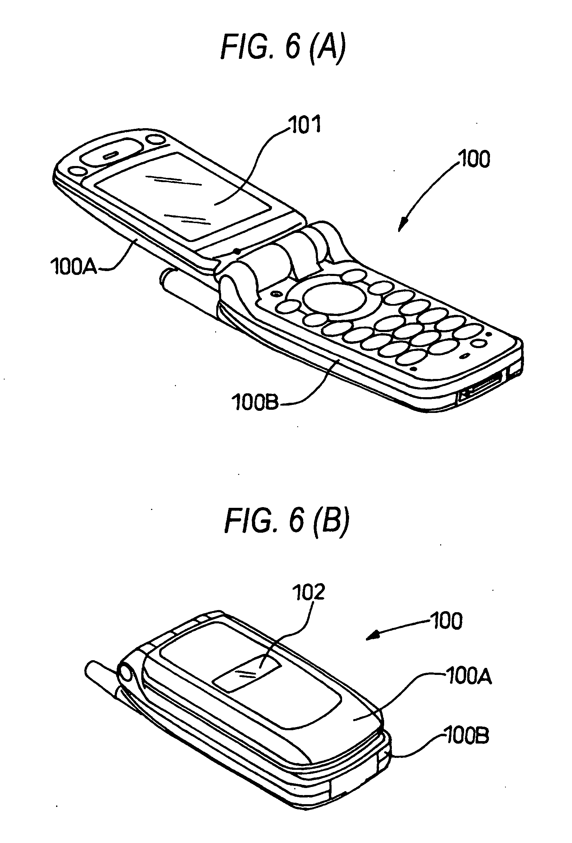

Fig. 6 shows a portable terminal apparatus having an ordinary structure.

In this portable terminal apparatus, as shown in Fig. 6(A), at the time of speaking or recognizing information, an upper casing 100A and a lower casing 100B forming a casing 100 are used while the casings are opened and used to visually recognize a main display part 101. Further, upon waiting for speaking or a communication, the portable terminal apparatus is ordinarily frequently accommodated in a pocket or the like while the casing 100 is closed, as shown in Fig. 6(B). When the user recognizes only the call receiving history, the user may recognize a sub-display part (a sub-display surface) 102 while the casing is closed.

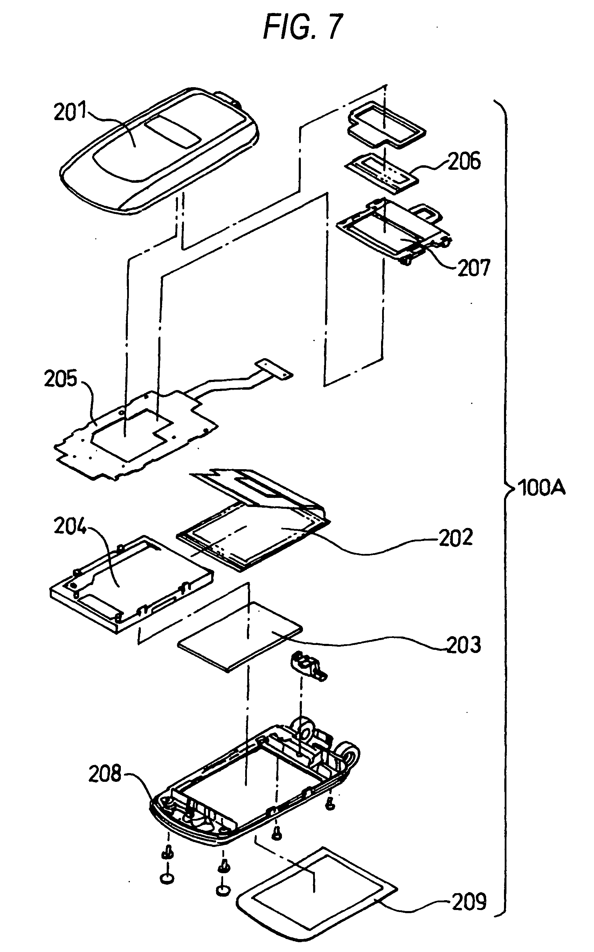

Now, the inner part of the upper casing having the sub-display surface composed of a liquid crystal as the sub-display part will be described in detail by referring to Fig. 7.

The upper casing 100A includes, as a schematic structure, an outer case 201, a main liquid crystal display device 202, a liquid crystal holder 204 having a light guide plate 203, a base 205, a sub- liquid crystal display device 206, a sub-liquid crystal holder 207, an inner case 208 and a display part (a display surface) 209.

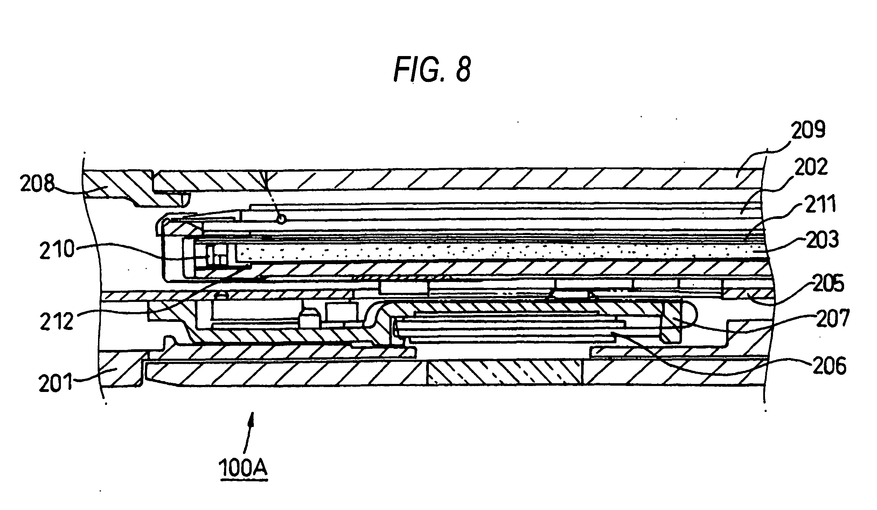

An operation of the liquid crystal display device will be described in detail by referring to Fig. 8 as a sectional structural view of the upper casing.

Lights emitted from a light emitting element 210 are incident from the end face of the light guide plate 203. The lights vertically incident on the end face of the light guide plate 203 of the lights incident from the end face advance straight and the lights except them are refracted on the end face. Then, the lights except the vertically incident lights are reflected on a diffusing sheet 211 and a reflecting sheet 212 located at both the sides of the light guide plate 203 and advance to an end face opposite to the light incident side of the light guide plate 203. Then, the lights reflected on the reflecting sheet 212 pass through the diffusing sheet 211 so that the main liquid crystal display device 202 is allowed to emit light. The sub-liquid crystal display device has the same structure as the above-described structure.

As described above, when the display part is displayed by the liquid crystal display device, a one-surface display having a reflecting plate on one surface is ordinarily employed. To provide display parts on both surfaces, a plurality of display devices are required.

However, in such a structure, only for the purpose of recognizing the call receiving history, the sub-liquid crystal display device having the same structure as that of the main liquid crystal display device needs to be disposed on an opposite surface with the base of the main liquid crystal display part sandwiched in between them. Accordingly, the portable terminal apparatus has been hardly miniaturized and light-weighted.

Thus, the development of a liquid crystal display device has been studied that has a structure in which reflecting sheets are disposed in parts of both the surfaces of a main liquid crystal display device to assuredly recognize information from both the surfaces. To realize this liquid crystal display device, a liquid crystal display device that can display both surfaces has been proposed by using a liquid crystal in which a polarizing plate attached to the one side of a liquid crystal is attached to a front side and a back side, for instance, as the structure of the liquid crystal display device. As for this liquid crystal, for instance, JP-A-8-152619 shall be referred to.

However, in this method, an irradiation device for operating the liquid crystal display device to display information or the like on a display surface is not provided and a visibility is ensured only by external lights. Accordingly, when a periphery is dark, the visibility of the display surface is undesirably deteriorated.

With the above-described circumstances taken into consideration, it is an object of the present invention to provide a portable terminal apparatus in which an adequate visibility can be assured even when a periphery is dark, and liquid crystal display surfaces provided on both surfaces are irradiated with one light source in a casing so that thickness and weight can be easily reduced.

### <Disclosure of the Invention>

A portable terminal apparatus according to the present invention is a device for displaying information on a plurality of display surfaces provided on the front and back surfaces of a casing by using a single liquid crystal display device. The portable terminal apparatus is characterized in that a light guide plate is provided for guiding illuminating lights from a light emitting element of the single liquid crystal display device to the plurality of display surfaces provided on both the front and back surfaces to irradiate both the surfaces of a main body part of the liquid crystal display device with the lights.

According to this structure, the single liquid crystal device is used so that both the sides of a thin and inexpensive unit can be brightly irradiated with the lights and the visibility of an image display can be improved even when a periphery is dark.

Further, in the portable terminal apparatus according to the present invention, a single light guide plate may be disposed that reaches both the surfaces of the main body part of the liquid crystal display device to irradiate both the surfaces of the main body of the single liquid crystal display device with the lights.

Thus, both the surfaces of the main body can be irradiated with the lights by the single light guide plate. As a result, component parts can be reduced as the liquid crystal display device having a structure that the plurality of display parts provided on both the surfaces of the casing are irradiated with the lights.

Further, in the portable terminal apparatus according to the present Invention, the light guide plate may be formed in a winding form on both the surfaces of the main body part of the liquid crystal display device to irradiate both the surfaces of the main body part of the single liquid crystal display device with the lights.

Thus, both the surfaces of the main body part of a liquid crystal can be irradiated with the lights by the single light guide plate having a simple form. As a result, component parts can be reduced and simplified as the liquid crystal display device having a structure that the plurality of display parts provided on both the surfaces of the casing are irradiated with the lights.

Further, in the portable terminal apparatus according to the present invention, an opening may be formed on a part of the light guide plate facing the main body part of the liquid crystal display device to visually recognize display image information from the opening.

Thus, a part of the main body part of the liquid crystal display device can be irradiated with the lights only from one direction and the plurality of display parts can be irradiated with the lights by the single light guide plate. Accordingly, the liquid crystal display device can be miniaturized and light-weighted.

Further, in the portable terminal apparatus according to the present invention, transmitting areas corresponding to the display surfaces through which the illuminating lights can be transmitted in both the surfaces of the main body part of the liquid crystal display device may be provided at positions shifted to each other to avoid an overlap. The opening of the light guide plate may be provided at the position corresponding to the transmitting areas of the main body part of the liquid display device.

Thus, the plurality of display parts can be freely set and formed in both the surface sides of the main body part of the liquid crystal display device with a simple structure.

Further, in the portable terminal apparatus according to the present invention, a detecting unit may be provided for detecting opening and closing operations of the casing. An operating area of the liquid crystal display device may be limited in accordance with the opening and closing states detected by the detecting unit to switch the display part for displaying the image information.

Thus, when the casing is opened, the image information can be displayed only on the display part provided in the inner surface of the casing. When the casing is closed, the image information can be displayed only on the display part provided on the outer surface of the casing.

### <Brief Description of the Drawings>

Fig. 1 shows a portable telephone according to a first embodiment of the present invention. Fig. 1(A) is an explanatory view showing a state when various kinds of information displayed on a sub-display part are observed by opening a casing. Fig. 1(B) is an explanatory view showing a state when various kinds of information displayed on a main display part are observed by closing a casing;
Fig. 2 is a sectional view of an upper casing having a liquid crystal display device of the portable telephone according to the first embodiment of the present invention;
Fig. 3 is an exploded perspective view showing the structure of the liquid crystal display device when the main display part is disposed in an upper side;
Fig. 4 is an exploded perspective view showing a state when the liquid crystal display device is inverted from the state shown in Fig. 3 and the sub-display part is disposed in an upper side;
Fig. 5 is a sectional view of an upper casing having a liquid crystal display device according to a second embodiment of the present invention;
Fig. 6(A) is a view of an external appearance when a conventional portable terminal apparatus is opened and Fig.6 (B) is a view of an external appearance when the conventional portable terminal apparatus is dosed;
Fig. 7 is an exploded perspective view showing the structure of the upper casing of the conventional portable terminal apparatus; and
Fig. 8 is a sectional view of the upper casing of the conventional portable terminal apparatus shown in Fig. 7.

In the drawings, reference numeral 1 designates an upper casing. 11 designates a main display part (main display surface). 12 designates a sub-display part (sub-display surface). 2 designates a lower casing. 3 designate a hinge part. 4 and 5 designate liquid crystal display devices. 40 and 50 designate liquid crystal holders. 408 designates an opening. 41 designates a light emitting element (light source). 42 designates a light guide plate. 42B designates an opening. 42C designates a light input part. 42D designates a short surface part. 43 designates a liquid crystal main body part. 44, 44A and 44B designate diffusing sheets. 45, 45A and 45B designate reflecting sheets.

### <Best Mode for Carrying Out the Invention>

Now, embodiments of the present invention will be described below by referring to the accompanying drawings.

### [First Embodiment]

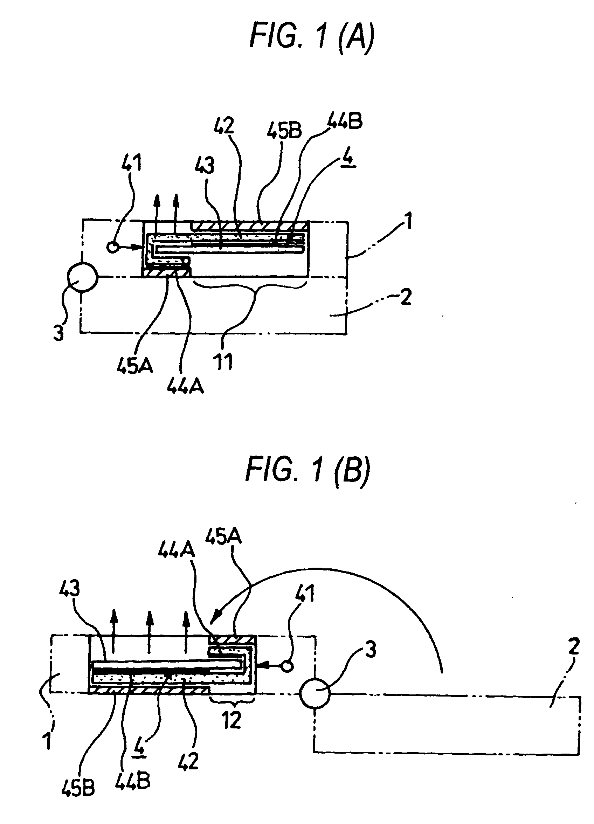

Fig. 1 shows a portable telephone according to a first embodiment of the present invention. The portable telephone is a collapsible type including an upper casing 1 having a liquid crystal display device 4, a lower casing 2 having an operation part (an illustration is omitted) and a hinge part 3 for connecting the casings so as to be freely rotate.

A main display surface 11 is provided in an inside case 1A (inner surface) side of the upper casing 1. A sub-display surface 12 is provided in an outside case 1B (outer surface) side of the upper casing 1. A single liquid crystal display device 4 may be used. Various kinds of information such as characters or graphic forms can be displayed on each of the display surfaces.

When the casings are opened, various kinds of information can be visually recognized through a main window 11A greatly opened at a central part on the main display surface 11. On the other hand, various kinds of information can be visually recognized while the casings are closed through a sub-window 12A opened at a central part on the sub-display surface 12 that is smaller than the main window 11A.

The liquid crystal display device 4 includes, as a schematic structure, a light emitting element 41 as a light source for emitting illuminating lights for a liquid crystal display, a light guide plate 42 for guiding the illuminating lights from the light emitting element 41 to emit the lights on the surfaces, a liquid crystal main body part 43 on which the lights from the light guide plate 42 are incident, a diffusing sheet 44, and a reflecting sheet 45 in a liquid crystal holder 40. A transparent electrode of the liquid crystal main body part 43 is driven under the control of a control part (not shown in the drawings) provided on a base 46.

The liquid crystal holder 40 is formed substantially in a U shape In section in which two long and short surfaces are connected together by one side end face part and the light guide plate 42 is inserted and mounted inside the liquid crystal holder. An opening part 40A in the short surface side faces the main window 11A of the main display part 11. On the other hand, an opening 40B that the sub-window 12A of the sub-display part 12 faces is formed on the long surface side.

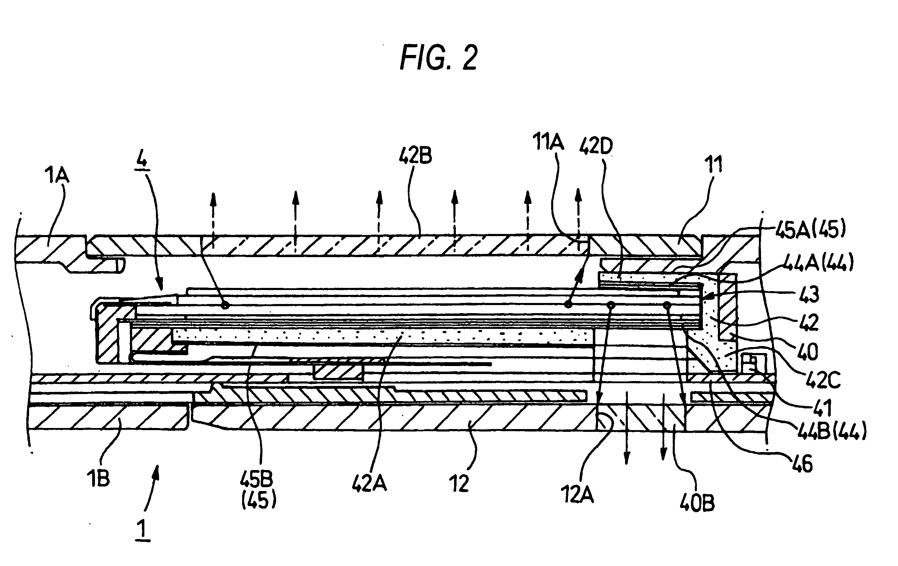

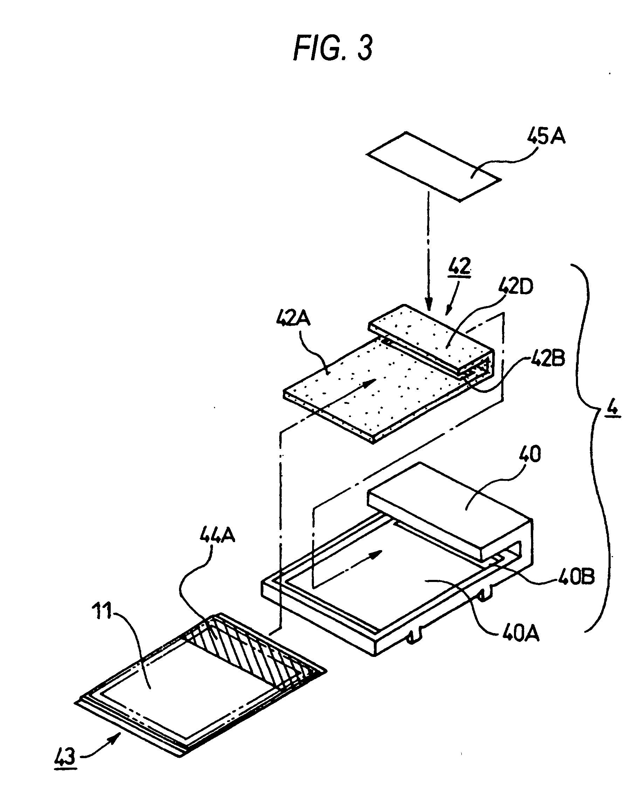

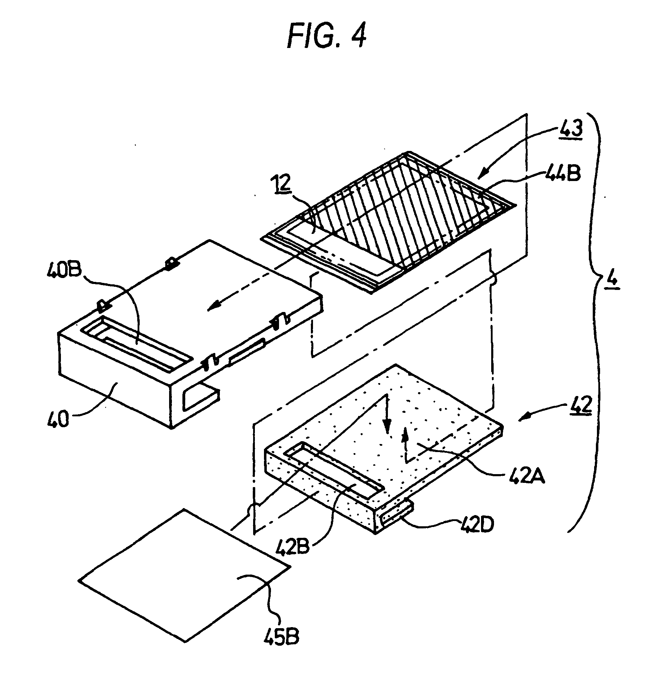

As shown in Figs. 3 and 4, the light guide plate 42 is formed substantially in a U shape in section like the liquid crystal holder 40. In other words, the light guide plate 42 is formed in a bending shape to turn the illuminating lights to both the surfaces of the liquid crystal main body part 43. In a long surface side (refer it to as a long surface part 42A, hereinafter), a similar opening 42B is formed in a part opposed to the opening 40B of the liquid crystal holder 40 side. The illuminating lights from a short surface part 42D opposed to and facing the long surface part 42A are projected and applied to the opening 42B of the light guide plate 42. The liquid crystal main body part 43 is inserted and disposed inside the light guide plate 42. In this embodiment, a light input part 42C (see Fig. 2) that is not shown in Fig. 3 for efficiently taking in the illuminating lights from the light emitting element 41 as the light source is formed in the light guide plate 42.

As the liquid crystal main body part 43, a liquid crystal main body having a well-known structure is used. Specifically, the liquid crystal main body part 43 includes a pair of polarizing elements, a pair of transparent electrodes disposed between the polarizing elements and a liquid crystal disposed between the pair of the transparent electrodes, which are not shown in the drawings.

The diffusing sheet 44 serves to diffuse lights incident thereon and uniformly irradiate the display surfaces with the lights. As shown In Figs. 3 and 4, the diffusing sheet 44 is formed with a substantially rectangular sheet disposed on the outer surfaces of the liquid crystal main body part 43 and in the inner surface side of the light guide plate 42. The diffusing sheet 44 includes a first diffusing sheet 44A and a second diffusing sheet 44B.

The first diffusing sheet 44A is made of a small sheet disposed on the upper surface of the liquid crystal main body part 43 in Fig. 3. An upper surface area of the liquid crystal main body part 43 except the first diffusing sheet substantially forms the main display part. On the other hand, the second diffusing sheet 44B is made of a large sheet disposed on the upper surface of the liquid crystal main body part 43 in Fig. 4. An upper surface area of the liquid crystal main body part 43 except the second diffusing sheet substantially forms the sub-display part.

The reflecting sheet 45 serves to prevent the illuminating lights from the light emitting element 41 from leaking outside. The reflecting sheet 45 is made of a suitable sheet type material having a high reflection factor. The first and second reflecting sheets 45A and 45B are respectively disposed on outer surface parts corresponding to the inner surfaces of the light guide plate 42 on which the diffusing sheets 44A and 44B are disposed.

On an end face of the light guide plate 42 as an outer surface area except the two large and small display surfaces provided in the liquid crystal display device 4 and the areas on which the reflecting sheets are disposed, the reflecting sheet is disposed in a part except the light input part 42C on which the lights from the light emitting element 41 are incident. Thus, the incident lights are supplied to the display surfaces without a leakage.

Now, an operation of the liquid crystal display device 4 according to the first embodiment will be described by referring to Figs. 1 to 4.

For instance, as shown in Fig. 1(A), under a state that the upper casing 1 and the lower casing 2 are closed, when various kinds of information are displayed on the sub-display surface of the sub-display part (sub-display surface) 12, the light emitting element 41 is turned on in Fig. 2. The illuminating lights outputted from the light emitting element 41 are incident from the light input part 42C provided on the end face of the light guide plate 42.

The lights of the lights incident on the light input part 42C on the end face of the light guide plate 42 that are vertically incident on the end face of the light guide plate 42 move straight in the light guide plate 42. The lights except the vertically incident lights are reflected on the reflecting sheet 45 disposed on the outer surface side of the light guide plate 42 to pass through the diffusing sheets. Thus, the lights are inputted so as to be transmitted to the liquid crystal display device 4. Thus, the liquid crystal display device 4 can be irradiated with the lights.

Further, the lights that partly reach the diffusing sheet 44 are reflected on the diffusing sheet 44, so that the lights are incident again on the light guide plate 42 to reach the reflecting sheet 45. Thus, the lights show a movement as already described above. This operation is repeated so that the illuminating lights outputted from the light emitting element 41 are reflected on the diffusing sheet 44 and the reflecting sheet 45 disposed on the upper and lower parts of the light guide plate 42 and advance to an end face of the left side surface of the light input part 42C.

As another movement of the lights, the lights advance in the rectangular light guide plate 42 and are turned and transmitted to the end of the short surface part 42D of the light guide plate 42 adjacent to the main display surface 11 as the upper surface of a main liquid crystal. Thus, the lights diffused on the short surface part 42D are supplied to the opening 40B opposed to and facing the short surface part 42D. Accordingly, the lights can be emitted on a part corresponding to the sub-display part (sub-display surface) 12 of the liquid crystal display device 4.

Thus, the thin liquid crystal display device 4 can be formed inexpensively in which both the surfaces of the liquid crystal main body part 43 are irradiated with the lights to display image information on the display surfaces provided on both the front and back surfaces of the upper casing corresponding thereto, that is, the main display part (main display surface) 11 and the sub-display part (sub-display surface) 12.

### [Second Embodiment]

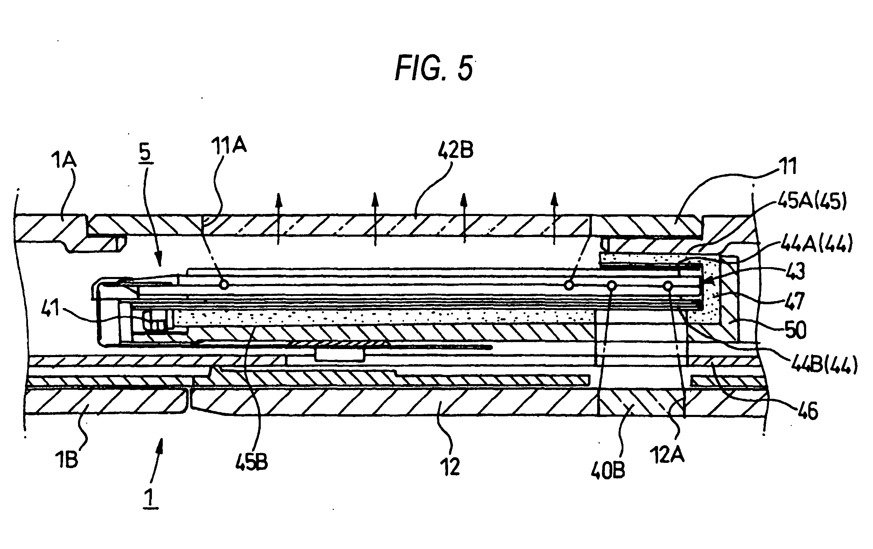

Now, a liquid crystal display device in a portable telephone according to a second embodiment of the present invention will be described by referring to Fig. 5. In this embodiment, the same parts as those of the first embodiment are designated by the same reference numerals and a duplicated explanation is omitted.

The difference between a liquid crystal display device 5 in this embodiment and the liquid crystal display device 4 of the first embodiment resides in that an exclusive light input part is not provided in a light guide plate 51 to allow illuminating lights to be incident and guide the illuminating lights directly from an end face and the position of a light emitting element 41 is completely incorporated without protruding from the inner part of a liquid crystal holder 50.

As described above, in this embodiment, the light emitting element 41 for allowing the light guide plate 51 to emit light is completely incorporated in the liquid crystal holder 50, so that the liquid crystal display device 5 can be formed as a unit and easily treated.

### [Third Embodiment]

A foldable portable terminal apparatus may have a structure for detecting opening and closing states. Thus, when a casing is closed, a signal for controlling an image may be outputted (transmitted) only to a pixel area corresponding to a sub-display part (sub-display surface) 12. When a casing is opened, a signal may be outputted only to a pixel area corresponding to a main display part (main display surface) 11.

In such a structure, information required for a user can be displayed only on either the main display surface or the sub-display surface depending on the opening and closing states of the casing. Thus, electric current can be saved.

The present invention is described In detail with reference to the specific embodiments. However, it is to be understood to a person with ordinary skill in the art that various changes or modifications may be applied to the invention without departing the spirit and scope of the present invention.

This application is based on Japanese Patent Application No. 2002-192093 filed on July 1, 2002 and the contents thereof are incorporated herein as a reference.

### <Industrial Applicability>

As described above, according to the present invention, the light guide plate is provided by which both the surfaces of the main body part of the single liquid crystal display device can be irradiated with lights. The single liquid crystal display device is used so that the plurality of display parts provided on both the front and back surfaces of the casing can be lighted. In other words, since the liquid crystal display surfaces provided on both the surfaces of the casing are irradiated with the lights from the single light source in the casing, the thin form and the light weight can be easily achieved.

Further, according to the present invention, the illuminating lights from the liquid crystal display device are supplied to both the surfaces of the main body part to irradiate the surfaces with the lights, which is different from a usual liquid crystal display device for displaying both surfaces depending on external lights. Accordingly, even when the periphery is dark, an adequate visibility can be assured on the display parts on both the surfaces of the casing. As a result, the portable terminal apparatus having the liquid crystal display device of high quality can be provided.

## Claims

1. A portable terminal apparatus for displaying information on a plurality of display surfaces provided on front and back surfaces of a casing by using a single liquid crystal display device, comprising:
a light guide plate, which guides illuminating lights from a light emitting element of the single liquid crystal display device to opposite directions to each other to irradiate both surfaces of a main body part of the liquid crystal display device with the lights.

2. The portable terminal apparatus as set forth in claim 1, wherein a single light guide plate is provided so as to extend until both the surfaces of the main body part of the liquid crystal display device to irradiate both the surfaces of the main body part of the single liquid crystal display device with the lights.

3. The portable terminal apparatus as set forth In claim 1, wherein the light guide plate is formed in a winding shape on both the surfaces of the main body part of the liquid crystal display device to irradiate both the surfaces of the main body part of the single liquid crystal display device with the lights.

4. The portable terminal apparatus as set forth in any one of claims 1 to 3, wherein an opening is formed on a part of the light guide plate facing the main body part of the liquid crystal display device; and
wherein the opening allows to visually recognize display image information therethrough.

5. The portable terminal apparatus as set forth in claim 4, wherein transmitting areas corresponding to the display surfaces through which the illuminating lights can be transmitted in both the surfaces of the main body part of the liquid crystal display device are provided at positions shifted to each other to avoid an overlap; and
wherein the opening of the light guide plate is provided at the position corresponding to the transmitting area of the main body part of the liquid display device.

6. The portable terminal apparatus as set forth in any one of claims 1 to 5, further comprising:
a detecting unit, which detects opening and closing operations of the casing,
wherein an operating area of the liquid crystal display device is limited In accordance with the opening and closing states detected by the detecting unit to switch the display part for displaying the image information.
